# EUROPÄISCHE PATENTSCHRIFT

(11) **EP 2 478 242 B1**
(45) Veröffentlichungstag und Bekanntmachung des Hinweises auf die Patenterteilung: **22.08.2018**
(21) Anmeldenummer: 10754863.8
(22) Anmeldetag: 03.09.2010
(51) Int. Cl.: F16D 23/02

(54) **BAUGRUPPE MIT ZWEI SYNCHRONRINGEN**
ASSEMBLY COMPRISING TWO SYNCHRONISER RINGS
ENSEMBLE COMPORTANT DEUX BAGUES DE SYNCHRONISATION

(30) Priorität: 14.09.2009 DE 102009041517
(43) Veröffentlichungstag der Anmeldung: 25.07.2012
(73) Patentinhaber: Hoerbiger Antriebstechnik Holding GmbH, 86956 Schongau (DE)
(72) Erfinder: ECHTLER, Peter, 86956 Schongau (DE); KÖLZER, Michael, 87672 Rosshaupten (DE); SAUTER, Markus, 86925 Fuchstal-Leeder (DE); SCHNELZER, Thomas, 86971 Peiting (DE); SIEGMUND, Armin, 86971 Peiting (DE); VÖLK, Wolfgang, 86978 Hohenfurch (DE)
(74) Vertreter: Prinz & Partner mbB
(86) Internationale Anmeldenummer: PCT/EP2010/005432
(87) Internationale Veröffentlichungsnummer: WO 2011/029559

(56) Entgegenhaltungen:
- EP-A1- 2 194 286
- DE-A1- 19 701 538
- DE-A1- 19 740 305
- DE-A1-102006 060 534
- DE-A1-102008 047 484
- DE-A1-102008 047 485
- DE-B3-102004 036 507
- JP-A- 2007 139 166
- US-A- 4 138 007
- US-A- 5 901 823

## Beschreibung

Die Erfindung betrifft eine Baugruppe für eine Synchronisierung für ein Schaltgetriebe, mit einem Transmitter sowie einem ersten und einem zweiten Synchronring, die miteinander verbunden sind.

Eine solche Baugruppe ist aus der DE 43 24 814 A1 bekannt. Die Synchronringe sind auf der einen und der anderen Seite einer Schiebemuffe angeordnet und mit mehreren Vorsprüngen versehen, die sich durch Ausnehmungen in der Schiebemuffe hindurch erstrecken. Die beiden Synchronringe sind miteinander verbunden, indem die Vorsprünge miteinander verschweißt werden.

Nachteilig ist dabei zum einen, dass beim Schweißen eine große Wärmemenge in die Synchronringe eingebracht wird. Dadurch besteht das Risiko, dass sich die Materialeigenschaften der verwendeten Legierung ändern, insbesondere wenn es sich um gehärtete oder vergütete Bauteile handelt. Zum anderen ist es nur mit sehr großem Aufwand möglich, quasi im Inneren der Schaltmuffe eine Schweißnaht mit der erforderlichen Qualität herzustellen.

Die gattungsbildende JP 2007 139166 A zeigt eine Synchronisierung für ein Schaltgetriebe mit zwei Synchronringen, die schwalbenschwanzförmige Vorsprünge aufweisen, welche mit Spiel in Ausnehmungen eines Synchronkörpers eingreifen und auf diese Weise die Synchronringe indirekt miteinander koppeln.

Aus der DE 10 2004 036 507 B3 ist eine Kopplung zweier Synchronringe in einem Schaltgetriebe bekannt, die über einen Ausgleichshebel erfolgt, der in ein Druckstück des Synchronkörpers integriert ist und mit Spiel in Ausnehmungen in den Synchronringen eingreift.

Ferner ist aus der DE 197 40 305 A1 eine Synchronisierung bekannt, bei der zwei Synchronringe verwendet werden, die auf entgegengesetzten Seiten einer Schiebemuffe angeordnet sind. Die beiden Synchronringe sind jeweils mit Laschen versehen, die sich durch Öffnungen in der Schiebemuffe hindurch hin zum anderen Synchronring erstrecken und dort an diesem anliegen.

In der DE 197 01 538 A1 ist weiter eine Getriebeschaltung mit einer Sperrsynchronisierung gezeigt. Bei dieser Getriebeschaltung werden die Kupplungsscheiben durch Sicherungsbleche axial gesichert, um zu vermeiden dass sich die Synchronisierungen gegenseitig beeinflussen.

Die Aufgabe der Erfindung besteht somit darin, eine Baugruppe der eingangs genannten Art dahingehend weiterzubilden, dass die beiden Synchronringe mit geringerem Aufwand miteinander gekoppelt werden können.

Zur Lösung dieser Aufgabe ist bei einer Baugruppe der eingangs genannten Art erfindungsgemäß vorgesehen, dass der Transmitter auf beiden Seiten mit jeweils einer Übertragungsverzahnung versehen ist, die in Eingriff mit einer Koppelverzahnung gebracht werden kann, die jedem Gangrad zugeordnet ist, sowie dass der Transmitter mindestens eine Fixieröffnung aufweist und die beiden Synchronringe durch diese Fixieröffnung hindurch durch eine Formschlussverbindung miteinander verbunden sind. Ferner weist jeder der beiden Synchronringe mindestens zwei Verbindungslaschen auf, die sich zum jeweils anderen Synchronring hin erstrecken. Dabei ist jede der Verbindungslaschen mit einer Formschlussgestaltung versehen. Dies ermöglicht es, die Synchronringe durch ein anderes Bauteil der Synchronisierung hindurch, beispielsweise eine Schaltmuffe oder einen Transmitter, zu verbinden. Auf diese Weise lassen sich die beiden Synchronringe mit geringem Aufwand zuverlässig miteinander verbinden und beruht auf der Erkenntnis, dass ein vergleichsweise simpler Hinterschnitt ausreichend ist, um die Synchronringe zuverlässig zu verbinden. Eine solche Baueinheit erleichtert die Montage des Getriebes erheblich, da nicht während der Montage an einer tief im Inneren liegenden Stelle geschweißt werden muss.

Vorzugsweise kann dabei vorgesehen sein, dass die Formschlussgestaltung durch einen Verbindungsvorsprung an einem der Synchronringe und eine komplementäre Aufnahmeöffnung am anderen Synchronring gebildet ist. Dies ermöglicht es, die beiden Synchronringe wie zwei Teile eines Puzzles mit geringem Aufwand miteinander zu verbinden, indem der Verbindungvorsprung des einen Synchronrings in die Aufnahmeöffnung des anderen Synchronrings eingesteckt wird.

Dabei kann vorgesehen sein, dass die Formschlussgestaltung in radialer Richtung frei beweglich ist. Diese Ausgestaltung beruht auf der Erkenntnis, dass eine Fixierung der beiden Synchronringe unmittelbar aneinander in radialer Richtung nicht notwendig ist, sondern dass es ausreicht, die radiale Fixierung durch die Montage im Getriebe herbeizuführen. Beispielsweise ist die Positionierung der Synchronringe durch ihnen zugeordnete Reibflächen oder in einem Transmitter ausreichend, um ein Lösen der in radialer Richtung frei beweglichen Formschlussgestaltung zuverlässig auszuschließen.

Gemäß einer alternativen Ausgestaltung ist vorgesehen, dass die Formschlussgestaltung durch eine Aufnahmeöffnung in jedem der beiden Synchronringe gebildet ist, wobei ein separates Verbindungselement vorgesehen ist, das in die beiden Aufnahmeöffnungen eingreift. Auch mit einem solchem separaten Verbindungselement können die beiden Synchronringe mit geringem Aufwand miteinander verbunden werden.

Gemäß einer alternativen Ausgestaltung ist vorgesehen, dass die Verbindungslaschen miteinander verprägt sind. Auch dies ermöglicht, den Formschluss zum Verbinden der beiden Synchronringe mit geringem Aufwand herzustellen.

Gemäß einer Ausgestaltung der Erfindung ist vorgesehen, dass die beiden Synchronringe identisch sind. Dies erhöht die Anzahl der Gleichteile und verringert dadurch die Stückkosten. Auch werden Kosten für die Logistik bei der Bevorratung verschiedener Bauteile eingespart.

Die Erfindung wird nachfolgend anhand verschiedener Ausführungsformen beschrieben, die in den beigefügten Zeichnungen dargestellt sind:
- Figur 1 in einem schematischen Schnitt eine Synchronisierung für ein Schaltgetriebe mit einer Baugruppe gemäß einer ersten Ausführungsform der Erfindung;
- Figur 2 die Synchronisierung von Figur 1 in einer schematischen Explosionsansicht;
- Figur 3 die Baugruppe gemäß der ersten Ausführungsform in einer perspektivischen Ansicht;
- Figur 4 die Baugruppe von Figur 3 angebracht an einem Transmitter;
- Figur 5 einen Ausschnitt einer Baugruppe gemäß einer zweiten Ausführungsform der Erfindung;
- Figur 6 in einer perspektivischen Ansicht eine Baugruppe gemäß einer dritten Ausführungsform der Erfindung.

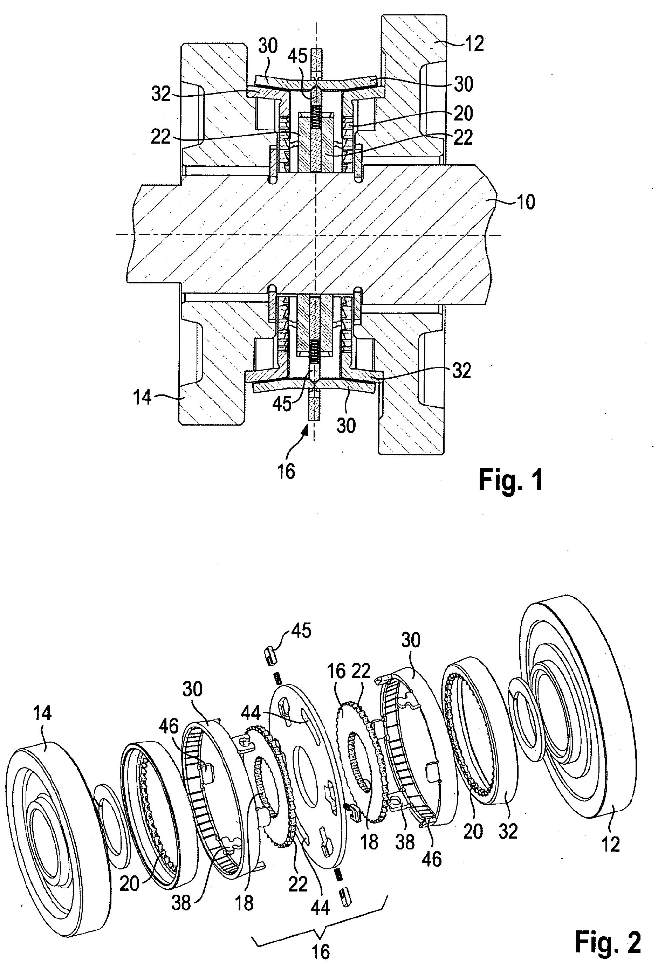

In Figur 1 ist eine Getriebewelle 10 gezeigt, auf der zwei Gangräder 12, 14 angeordnet sind. Die beiden Gangräder 12, 14 sind Teil eines Schaltgetriebes, wie es insbesondere in Kraftfahrzeugen eingesetzt werden kann. Die ihnen zugeordneten weiteren Zahnräder, mit denen zusammen die Gangstufen des Getriebes gebildet werden, sind hier ebenso wenig gezeigt wie eine zweite Getriebewelle. Die Gangräder 12, 14 sind als Losräder ausgebildet und drehbar auf der Getriebewelle 10 angeordnet. Um eine Gangstufe zu schalten, muss eine drehfeste Verbindung von der Getriebewelle 10 zum entsprechenden Gangrad 12, 14 ausgebildet werden. Zu diesem Zweck ist hier ein Transmitter 16 vorgesehen, der über Verzahnungen 18 drehfest auf der Getriebewelle 10 angebracht ist, jedoch in axialer Richtung verschiebbar ist. Der Transmitter 16 ist auf beiden Seiten mit jeweils einer Übertragungsverzahnung 22 versehen, die in Eingriff mit einer Koppelverzahnung 20 gebracht werden kann, die jedem Gangrad 12, 14 zugeordnet ist.

Der Transmitter 16 wird, wenn eine Gangstufe geschaltet werden soll, durch eine hier nicht dargestellte Schaltgabel oder Schaltklaue in axialer Richtung auf der Getriebewelle 10 verschoben, bis eine der Übertragungsverzahnungen 22 in die Koppelverzahnung 20 des zu schaltenden Gangrades 12 oder 14 eingreift.

Um vor dem Schalten einer Gangstufe die Drehzahl des zu schaltenden Gangrades 12,14 an die Drehzahl der Getriebewelle 10 anzugleichen, sind zwei Synchronringe 30 vorgesehen, die auf der einen und der anderen Seite des Transmitters 16 angeordnet sind und mit Reibflächen 32 zusammenwirken können, die den Gangrädern 12,14 zugeordnet sind.

Da die beiden Synchronringe identisch ausgeführt sind, wird im Folgenden lediglich einer der beiden beschrieben. Jeder Synchronring 30 weist einen Reibkörper 34 auf, der ringförmig ausgeführt ist. Im dargestellten Ausführungsbeispiel ist jeder Reibkörper 34 vom Transmitter 16 weg geringfügig konisch aufgeweitet. Auf der Innenseite des Reibkörpers 34 ist ein Reibbelag 36 vorgesehen. In Abhängigkeit vom verwendeten Reibsystem kann alternativ auf der Außenfläche des Reibkörpers 34 ein Reibbelag vorgesehen sein.

Vom Reibkörper 34 weg erstrecken sich in axialer Richtung genau zwei Verbindungslaschen 38, von denen eine mit einer Aufnahmeöffnung 40 und die andere mit einem Verbindungsvorsprung 42 versehen ist. Die Aufnahmeöffnung 40 ist hinterschnitten ausgeführt, weist also zum freien Ende der Verbindungslasche hin eine Einschnürung auf. Der Verbindungsvorsprung 42 weist eine zur Aufnahmeöffnung 40 komplementäre Gestalt auf, besteht also hier aus einem breiteren Kopf am Ende, der durch einen schmalen Steg mit der eigentlichen Verbindungslasche 38 verbunden ist.

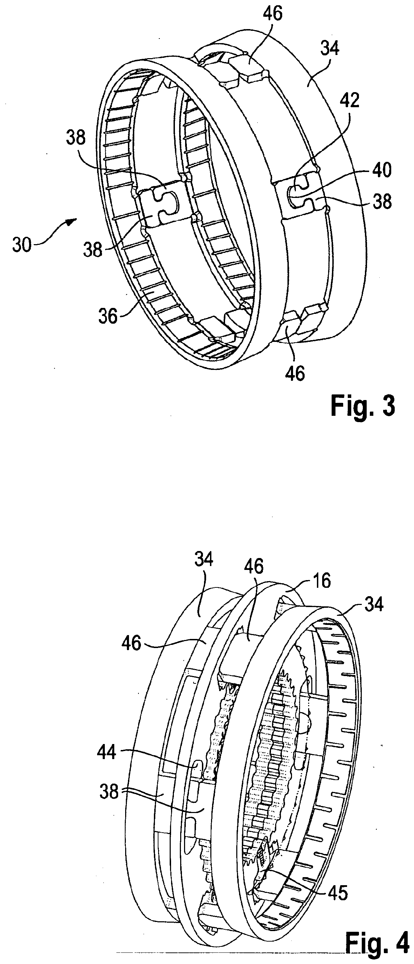

Von den beiden Verbindungslaschen 38 ist eine mit der Aufnahmeöffnung 40 und die andere Verbindungslasche mit dem Verbindungsvorsprung 42 versehen. Wie in Figur 3 zu sehen ist, ermöglicht dies, zwei identisch ausgeführte Synchronringe 30 zu verwenden, die dadurch in axialer Richtung miteinander verbunden sind, dass der Verbindungsvorsprung 42 des einen Synchronrings in die Aufnahmeöffnung 40 des anderen Synchronrings eingeschoben wird. Zu diesem Zweck kann ein Synchronring so an den Transmitter angesetzt werden, dass seine Verbindungslaschen 38 sich vollständig durch Fixieröffnungen 44 im Transmitter hindurch erstrecken, also soweit, dass sowohl die Aufnahmeöffnung 40 als auch der Verbindungsvorsprung 42 auf der anderen Seite frei zugänglich sind. Dann wird der zweite Synchronring montiert, indem dessen Verbindungsvorsprung und dessen Aufnahmeöffnung wie zwei Puzzleteile in die Aufnahmeöffnung und den Verbindungsvorsprung des am Transmitter 16 fixierten Synchronrings eingeschoben werden. Bezogen auf die spätere Anordnung an der Getriebewelle erfolgt dies dadurch, dass der eine Synchronring in radialer Richtung relativ zum anderen Synchronring verschoben wird, und zwar auf einem Durchmesser, der sich durch die beiden Verbindungslaschen 38 hindurch erstreckt. Schließlich wird die auf diese Weise gebildete Baugruppe der beiden fest miteinander verbundenen Synchronringe relativ zum Transmitter 16 in eine Mittelstellung zurückgeschoben, in der die Aufnahmeöffnung 40 und der Verbindungsvorsprung 42 innerhalb der Fixieröffnung 44 liegen (siehe Figur 4). Auf diese Weise ist gewährleistet, dass sich die beiden Synchronringe nicht in radialer Richtung soweit relativ zueinander verschieben können, dass die beiden Formschlussgestaltungen voneinander gelöst werden können.

Zusammen mit dem Transmitter 16 ist so eine vormontierte Baugruppe gebildet, bei der die beiden Synchronringe 30 unter der Wirkung von Druckstücken 45 in einer zentrierten Position relativ zum Transmitter fixiert sind, in der ein Lösen der Formschlussverbindung zwischen den beiden Synchronringen 30 verhindert.

Die beiden Synchronringe sind zusätzlich mit weiteren Laschen 46 versehen, die für die Sperrfunktion und die Übertragung des Synchronmoments verwendet werden. Die Synchronisierung steht jedoch in keinerlei Zusammenhang mit der vorliegenden Erfindung, so dass hierauf nicht weiter eingegangen wird.

Anstelle der hier konkret gezeigten Aufnahmeöffnung 40 und des Verbindungsvorsprungs 42 kann auch eine andere geometrische Form verwendet werden, solange eine in axialer Richtung wirksame Formschlussverbindung hergestellt wird. Beispielsweise könnte die Aufnahmeöffnung 40 L-förmig und der Verbindungsvorsprung 42 komplementär als L-förmig abstehende Lasche ausgeführt sein.

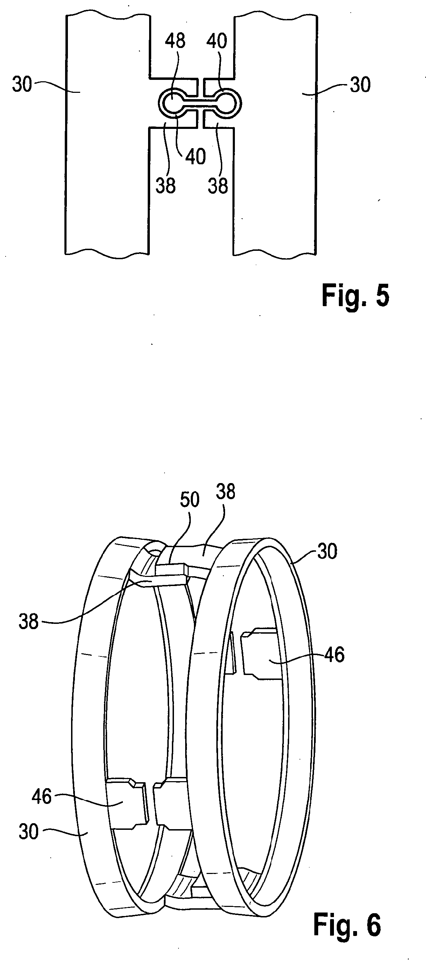

In Figur 5 ist eine alternative Ausgestaltung gezeigt, die an beiden Synchronringen eine Aufnahmeöffnung 40 verwendet. Die formschlüssige Verbindung zwischen den beiden Synchronringen 30 ist hier durch ein Verbindungselement 48 herbeigeführt, das allgemein langgestreckt ausgeführt ist und an jedem Ende eine Verdickung aufweist. Das Verbindungselement 48 hat also eine allgemein knochenförmige Gestalt. Das Verbindungselement 48 kann durch geeignete Maßnahmen mit den beiden Aufnahmeöffnungen 40 in Eingriff gehalten werden, beispielsweise durch Verpressen, Verstemmen oder Verprägen.

In Figur 6 ist eine weitere Ausführungsform gezeigt, bei der die formschlüssige Verbindung zwischen den beiden Synchronringen 30 durch eine Prägestelle 50 gebildet ist, die an den Verbindungslaschen 38 ausgeführt ist. Zu diesem Zweck sind die beiden Verbindungslaschen 38 so lang ausgeführt, dass sie sich mittig überlappen. Um auch bei dieser Ausführungsform zwei identische Synchronringe verwenden zu können, weist jeder Synchronring genau zwei Verbindungslaschen 38 auf, von denen eine gegenüber einer Referenzlage nach außen abgebogen und die andere nach innen abgebogen ist. Dadurch können die beiden Synchronringe so aneinander angesetzt werden, dass bei zentrierter Anordnung ihre Verbindungslaschen 38 genau aneinander anliegen.

## Patentansprüche

1. Baugruppe für eine Synchronisierung eines Schaltgetriebes, mit einem Transmitter (16) sowie einem ersten und einem zweiten Synchronring (30), die miteinander verbunden sind, wobei der Transmitter (16) mindestens eine Fixieröffnung (44) aufweist und die beiden Synchronringe durch diese Fixieröffnung (44) hindurch durch eine Formschlussverbindung (40, 42; 40, 48; 50) miteinander verbunden sind, und wobei der Transmitter (16) auf beiden Seiten mit jeweils einer Übertragungsverzahnung (22) versehen ist, die in Eingriff mit einer Koppelverzahnung (20) gebracht werden kann, die jedem Gangrad (12, 14) zugeordnet ist, **dadurch gekennzeichnet, dass** jeder der beiden Synchronringe (30) mindestens zwei Verbindungslaschen (38) aufweist, die sich zum jeweils anderen Synchronring (30) hin erstrecken, wobei jede der Verbindungslaschen (38) mit einer Formschlussgestaltung (40, 42; 40, 48; 50) versehen ist.

2. Baugruppe nach Anspruch 1, **dadurch gekennzeichnet, dass** die Formschlussgestaltung durch einen Verbindungsvorsprung (42) an einem der Synchronringe (30) und eine komplementäre Aufnahmeöffnung (40) am anderen Synchronring gebildet ist.

3. Baugruppe nach einem der vorhergehenden Ansprüche, **dadurch gekennzeichnet, dass** die Formschlussgestaltung (40, 42) in radialer Richtung frei beweglich ist.

4. Baugruppe nach Anspruch 1, **dadurch gekennzeichnet, dass** die Formschlussgestaltung durch eine Aufnahmeöffnung (40) in jedem der beiden Synchronringe (30) gebildet ist, und dass ein separates Verbindungselement (48) vorgesehen ist, das in die beiden Aufnahmeöffnungen (40) eingreift.

5. Baugruppe nach einem der Ansprüche 1, 2 oder 4, **dadurch gekennzeichnet, dass** die Verbindungslaschen (38) miteinander verprägt sind.

6. Baugruppe nach einem der vorhergehenden Ansprüche, **dadurch gekennzeichnet, dass** die beiden Synchronringe (30) identisch sind.

## Claims

1. An assembly for a synchronization of a manual gearbox, comprising a transmitter (16) and first and second synchronizer rings (30) which are connected with each other, the transmitter (16) having at least one locating opening (44), and the two synchronizer rings being connected with each other through this locating opening (44) by a form-fitting connection (40, 42; 40, 48; 50), and the transmitter (16) being provided on both sides with a respective transmission toothing (22) which can be caused to engage in a coupling toothing (20) that is associated with each speed change gear (12, 14), **characterized in that** each of the two synchronizer rings (30) includes at least two connecting tabs (38) which extend towards the respective other synchronizer ring (30), each of the connecting tabs (38) being provided with a form-fitting configuration (40, 42; 40, 48; 50).

2. The assembly according to claim 1, **characterized in that** the form-fitting configuration is formed by a connecting projection (42) on one of the synchronizer rings (30) and a complementary receiving opening (40) on the other synchronizer ring.

3. The assembly according to either of the preceding claims, **characterized in that** the form-fitting configuration (40, 42) is freely movable in the radial direction.

4. The assembly according to claim 1, **characterized in that** the form-fitting configuration is formed by a receiving opening (40) in each of the two synchronizer rings (30), and **in that** a separate connecting element (48) is provided which engages in the two receiving openings (40).

5. The assembly according to any of claims 1, 2 or 4, **characterized in that** the connecting tabs (38) are stamped together.

6. The assembly according to any of the preceding claims, **characterized in that** the two synchronizer rings (30) are identical.

## Revendications

1. Ensemble pour une synchronisation d'une boîte de vitesses, comportant un transmetteur (16) ainsi qu'un premier et un deuxième anneau de synchronisation (30) qui sont reliés l'un à l'autre, le transmetteur (16) présentant au moins un orifice de fixation (44), et les deux anneaux de synchronisation étant reliés l'un à l'autre à travers cet orifice de fixation (44) par une liaison par coopération de formes (40, 42 ; 40, 48 ; 50), et le transmetteur (16) étant pourvu des deux côtés d'une denture de transmission (22) respective qui est apte à être amenée en engagement avec une denture de couplage (20) associée à chaque pignon de vitesse (12, 14), **caractérisé en ce que** chacun des deux anneaux de synchronisation (30) présente au moins deux pattes de raccordement (38) qui s'étendent vers l'autre anneau de synchronisation (30) respectif, chacune des pattes de raccordement (38) étant pourvue d'une configuration à coopération de formes (40, 42 ; 40, 48 ; 50).

2. Ensemble selon la revendication 1, **caractérisé en ce que** la configuration à coopération de formes est réalisée par une saillie de raccordement (42) sur l'un des anneaux de synchronisation (30) et un orifice de logement complémentaire (40) sur l'autre anneau de synchronisation.

3. Ensemble selon l'une des revendications précédentes, **caractérisé en ce que** la configuration à coopération de formes (40, 42) est librement mobile dans le sens radial.

4. Ensemble selon la revendication 1, **caractérisé en ce que** la configuration à coopération de formes est réalisée par un orifice de logement (40) dans chacun des deux anneaux de synchronisation (30), et **en ce qu'**il est prévu un élément de raccordement séparé (48) qui s'engage dans les deux orifices de logement (40).

5. Ensemble selon l'une des revendications 1, 2 ou 4, **caractérisé en ce que** les pattes de raccordement (38) sont estampées les unes avec les autres.

6. Ensemble selon l'une des revendications précédentes, **caractérisé en ce que** les deux anneaux de synchronisation (30) sont identiques.
